# EUROPÄISCHE PATENTSCHRIFT

(11) **EP 3 132 726 B1**
(45) Veröffentlichungstag und Bekanntmachung des Hinweises auf die Patenterteilung: **09.10.2019**
(21) Anmeldenummer: 16182673.0
(22) Anmeldetag: 04.08.2016
(51) Int. Cl.: A47J 31/46

(54) **AUSLAUFEINRICHTUNG UND LICHTLEITVORRICHTUNG FÜR EINE HEISSGETRÄNKEMASCHINE**
OUTLET DEVICE AND LIGHT GUIDING DEVICE FOR A HOT DRINK MACHINE
DISPOSITIF D'ÉCOULEMENT ET DISPOSITIF DE CONDUCTEUR LUMINEUX POUR UNE MACHINE DE BOISSONS CHAUDES

(30) Priorität: 20.08.2015 DE 102015113823
(43) Veröffentlichungstag der Anmeldung: 22.02.2017
(73) Patentinhaber: Miele & Cie. KG, 33332 Gütersloh (DE)
(72) Erfinder: Wüstefeld, Michael, 59555 Lippstadt (DE)

(56) Entgegenhaltungen:
- EP-A1- 1 762 163
- DE-A1-102009 003 251
- DE-A1-102014 225 814

## Beschreibung

Die Erfindung betrifft eine Lichtleitvorrichtung für eine Auslaufeinrichtung für eine Heißgetränkemaschine, eine Auslaufvorrichtung für eine Heißgetränkemaschine, eine Heißgetränkemaschine und ein Verfahren zum Beleuchten eines Getränkebehälterabstellabschnittes einer Heißgetränkemaschine, insbesondere eines Kaffeevollautomaten.

Bei Kaffeevollautomaten kann im Bereich eines Auslaufs beispielsweise ein Lichtleiter dauerhaft ungeschützt frei stehend im Innenbereich des Auslaufes verbleiben oder der Lichtleiter kann unbeweglich und starr im Gerät vorgesehen sein.

Die DE 102 10 161 A1 offenbart einen Getränkebereiter, insbesondere eine Kaffeemaschine, mit einer Beleuchtungseinrichtung. Die EP 2 628 420 A1 zeigt eine Heißgetränkezubereitungsvorrichtung mit einer Beleuchtungseinheit.

Die DE 10 2009 003 251 A1 offenbart einen Kaffeevollautomaten mit einer höhenverstellbaren Auslaufeinrichtung. Zur Beleuchtung des Ausgabebereichs ist am Gerätegehäuse ortsfest eine Leuchtquelle angebracht, die auf das bewegliche Gehäuse der Auslaufeinrichtung zielt. An dieser ist ein Reflektor angebracht, um den Lichtstrahl in abhängig von der eingestellten Höhe auf den darunterliegenden Abstellbereich umzulenken.

Der Erfindung stellt sich die Aufgabe, eine verbesserte Lichtleitvorrichtung für eine Auslaufeinrichtung für eine Heißgetränkemaschine, eine verbesserte Auslaufvorrichtung für eine Heißgetränkemaschine, eine verbesserte Heißgetränkemaschine und ein verbessertes Verfahren zum Beleuchten eines Getränkebehälterabstellabschnittes einer Heißgetränkemaschine bereitzustellen.

Erfindungsgemäß wird unter anderem diese Aufgabe durch eine Lichtleitvorrichtung für eine Auslaufeinrichtung für eine Heißgetränkemaschine, durch eine Auslaufvorrichtung für eine Heißgetränkemaschine, durch eine Heißgetränkemaschine und durch ein Verfahren zum Beleuchten eines Getränkebehälterabstellabschnittes einer Heißgetränkemaschine mit den Merkmalen der Hauptansprüche gelöst. Vorteilhafte Ausgestaltungen und Weiterbildungen der Erfindung ergeben sich aus den jeweils abhängigen Ansprüchen.

Die mit der Erfindung erreichbaren Vorteile bestehen neben einer zuverlässigen Beleuchtung eines Auslaufs für eine Heißgetränkemaschine, insbesondere einen Stand-Kaffeevollautomaten, beispielsweise darin, dass ein zur Beleuchtung eingesetzter Lichtleiter vor Verschmutzung durch Getränkespritzer und aufsteigenden Dampf geschützt werden kann und ein Nutzer insbesondere das Innere des Auslaufes ohne das lichttechnisch relevante Bauteil bestmöglich reinigen kann. Auch wenn hierbei der Ort einer Lichteinspeisung beispielsweise bauraumbedingt entfernt zur Lichtauskopplung liegt, kann die Lichtauskopplung flächenförmig erfolgen, sodass insbesondere eine Tassenabstellfläche auf einem Tropfblech gleichmäßig und großflächig beleuchtet werden kann. Als Zusatznutzen
kann der Lichtleiter beispielsweise Statussignale abstrahlen bzw. zur Anzeige von Zuständen mit genutzt werden. Die Beleuchtung bzw. die Lichtauskopplung kann sich mit einem motorisch verstellbaren Auslauf mitbewegen, damit ein Heißgetränk bestmöglich ausgeleuchtet und darstellt werden kann. So kann ausgekoppeltes Licht insbesondere nah am zu füllenden Gefäß geführt werden, da der Lichtleiter mit dem Auslauf mit verfahren kann. Auch eine Darstellung von Geräteinformationen ohne die Notwendigkeit ein Display einzusetzen kann realisiert werden. Ein Stand-Kaffeevollautomat kann insbesondere mit einer hochwertigen Gerätebeleuchtung im Getränkeauslauf versehen werden, auch wenn beengte Platzverhältnisse, technische Herausforderungen hinsichtlich Umgebungsbedingungen und eine effektive Lichttechnik zu berücksichtigen sind.

Es wird eine Lichtleitvorrichtung für eine Auslaufeinrichtung für eine Heißgetränkemaschine vorgestellt, wobei die Auslaufeinrichtung relativ zu einem Korpus der Heißgetränkemaschine und zu einem Getränkebehälterabstellabschnitt der Heißgetränkemaschine bewegbar ist, wobei die Lichtleitvorrichtung an der Auslaufeinrichtung befestigbar ausgeformt ist, wobei die Lichtleitvorrichtung mit der Auslaufeinrichtung mitbewegbar ist, wobei die Lichtleitvorrichtung mit einem linienförmigen Lichtaustritt ausgebildet ist, um Licht von zumindest einer in der Auslaufeinrichtung angeordneten Lichtquelle zu dem Getränkebehälterabstellabschnitt zu leiten.

Die Heißgetränkemaschine kann beispielsweise als ein Kaffeevollautomat, insbesondere ein Stand-Kaffeevollautomat oder ein Einbau-Kaffeevollautomat, ausgeführt sein. Die Auslaufeinrichtung kann benachbart zu, insbesondere in Betriebsposition über dem Getränkebehälterabstellabschnitt an dem Korpus der Heißgetränkemaschine anordenbar oder angeordnet sein. Die Auslaufeinrichtung ist dazu ausgebildet, um ein Heißgetränk in den Getränkebehälterabstellabschnitt der Heißgetränkemaschine aus dem Korpus der Heißgetränkemaschine auszugeben. Die Lichtleitvorrichtung ist dabei zur Beleuchtung des Getränkeauslaufs der Heißgetränkemaschine ausgebildet.

Gemäß einer Ausführungsform kann die Lichtleitvorrichtung eine Lichtleitereinrichtung aufweisen, die einen Lichtleiter zum Leiten des Lichts aufweist oder als ein Lichtleiter zum Leiten des Lichts ausgeformt ist. Anders ausgedrückt kann die Lichtleitereinrichtung zumindest den Lichtleiter aufweisen. Optional kann die Lichtleitereinrichtung den Lichtleiter und ein angeformtes Gehäuse aufweisen. Eine solche Ausführungsform bietet den Vorteil, dass mittels eines Lichtleiters auch bei begrenztem Bauraum und über eine Übertragungsstrecke hinweg zuverlässig Licht zum Ausleuchten des Getränkebehälterabstellabschnittes geleitet werden kann.

Dabei ist die Lichtleitereinrichtung bevorzugt einstückig ausgeformt. Beispielsweise kann die Lichtleitereinrichtung aus einem Kunststoff ausgeformt sein, insbesondere mittels Spritzgießens. Insbesondere kann der Lichtleiter aus Polymethylmethacrylat (PMMA) ausgeformt sein. Der Lichtleiter kann als ein flächiger Lichtleiter ausgeformt sein. Eine solche Ausführungsform bietet den Vorteil, dass die Lichtleitereinrichtung stabil, kostengünstig und leicht bereitgestellt werden kann. Zudem kann eine gute Lichtleiteigenschaft auch bei komplexer Bauraumgeometrie bereitgestellt werden.

Insbesondere kann die Lichtleitereinrichtung mit zwei Lichteinkopplungsvorsprüngen zum Einkoppeln des Lichts ausgeformt sein. Eine solche Ausführungsform bietet den Vorteil, dass eine Ausleuchtung des Getränkebehälterabstellabschnittes weiter verbessert werden kann, insbesondere homogener gestaltet werden kann.

Die Lichtleitereinrichtung kann mit einem länglichen oder U-förmig gekrümmten Querschnittsprofil an einem Lichtauskopplungsende zum Auskoppeln des Lichts ausgeformt sein. Hierbei kann die Lichtleitereinrichtung als ein flächiger Lichtleiter ausgeführt sein. Durch ein U-förmiges Lichtauskopplungsende kann eine sehr gute Ausleuchtung des Getränkebehälterabstellabschnitts erzielt werden.

Auch kann die Lichtleitereinrichtung mit einem zum Verteilen von Licht bearbeiteten Lichtauskopplungsende ausgeformt sein. Hierbei kann das Lichtauskopplungsende der die Lichtleitereinrichtung beispielsweise mit einer Erodierstruktur versehen sein. Eine solche Ausführungsform bietet den Vorteil, dass die Beleuchtung oder Ausleuchtung Getränkebehälterabstellabschnittes zielgerichtet, großflächig und homogen erfolgen kann.

Die Lichtleitvorrichtung kann ein Abdeckelement und ein Trägerelement zum Anbringen der Lichtleitvorrichtung an der Auslaufeinrichtung aufweisen. Hierbei kann die Lichtleitereinrichtung ausgeformt sein, um zwischen dem Abdeckelement und dem Trägerelement anordenbar oder angeordnet zu sein. Eine solche Ausführungsform bietet den Vorteil, dass die Lichtleitereinrichtung, insbesondere der Lichtleiter, vor mechanischer Belastung sowie vor Verunreinigung geschützt werden kann.

Dabei kann die Lichtleitereinrichtung zumindest einen Befestigungsabschnitt aufweisen, der mit dem Abdeckelement und zusätzlich oder alternativ dem Trägerelement formschlüssig verbindbar ausgeformt sein kann. Hierbei können das Abdeckelement und das Trägerelement formschlüssig miteinander verbindbar ausgeformt sein. Eine solche Ausführungsform bietet den Vorteil, dass die Lichtleitvorrichtung stabil und robust ausgeführt werden kann.

Ferner kann ein zumindest ein Lichtauskopplungsende umfassender Endabschnitt der Lichtleitereinrichtung ausgeformt sein, um in einem zusammengebauten Zustand der Lichtleitvorrichtung aus einem Zwischenraum zwischen dem Abdeckelement und dem Trägerelement hervorzustehen. Somit kann die Lichtleitereinrichtung in dem zusammengebauten Zustand der Lichtleitvorrichtung einen Überstand gegenüber dem Abdeckelement aufweisen. Der Überstand kann kleiner als ein Millimeter sein. Auf diese Weise kann das aus der Lichtleitvorrichtung ausgekoppelte Licht auch von einer vor der Heißgetränkemaschine stehenden Bedienperson erfasst werden.

Es wird auch eine Auslaufvorrichtung für eine Heißgetränkemaschine vorgestellt. Die Auslaufvorrichtung weist eine Auslaufeinrichtung auf, die relativ zu einem Korpus der Heißgetränkemaschine und zu einem Getränkebehälterabstellabschnitt der Heißgetränkemaschine bewegbar ausgeführt ist, und zumindest eine Lichtquelle zum Bereitstellen eines Lichtsignals aufweist. Ferner weist die Auslaufvorrichtung eine Ausführungsform der vorstehend genannten Lichtleitvorrichtung auf, wobei die Lichtleitvorrichtung mit der Auslaufeinrichtung gekoppelt ist und ausgebildet ist, um das Lichtsignal der Lichtquelle zu dem Getränkebehälterabstellabschnitt zu leiten.

Somit kann die Lichtleitvorrichtung, die mit der Auslaufeinrichtung koppelbar ausgeformt ist, vorteilhaft eingesetzt oder verwendet werden, um zumindest ein Lichtsignal von der zumindest einen Lichtquelle zu dem Getränkebehälterabstellabschnitt der Heißgetränkemaschine zu leiten.

Gemäß einer Ausführungsform kann die Lichtleitvorrichtung mit der Auslaufeinrichtung auf lösbare Weise gekoppelt sein, insbesondere mittels zumindest eines Magneten. Eine solche Ausführungsform bietet den Vorteil, dass die Lichtleitvorrichtung und die Auslaufeinrichtung einfach voneinander getrennt werden können, beispielsweise zur Reinigung oder Wartung, oder zum Ersetzen eines der Teile.

Es wird ferner eine Heißgetränkemaschine vorgestellt, die einen Korpus und einen Getränkebehälterabstellabschnitt aufweist, wobei die Heißgetränkemaschine eine Ausführungsform der vorstehend genannten Auslaufvorrichtung aufweist, wobei die Auslaufvorrichtung relativ zu dem Korpus und zu dem Getränkebehälterabstellabschnitt bewegbar ausgeführt ist.

Die Auslaufvorrichtung kann mittels einer Antriebseinrichtung in dem Korpus bewegbar sein.

Gemäß einer Ausführungsform kann die Heißgetränkemaschine ein Steuergerät aufweisen, das ausgebildet sein kann, um unter Verwendung von Betriebsdaten der Heißgetränkemaschine ein Ansteuersignal zum Ansteuern der zumindest einen Lichtquelle der Auslaufeinrichtung der Auslaufvorrichtung zu generieren, um zu bewirken, dass zumindest ein Lichtsignal, das eine Bedieninformation hinsichtlich einer Bedienung der Heißgetränkemaschine repräsentiert, durch die zumindest eine Lichtquelle erzeugt und mittels der Lichtleitvorrichtung geleitet wird. Eine solche Ausführungsform bietet den Vorteil, dass sowohl eine zuverlässige Ausleuchtung des Getränkebehälterabstellabschnittes als auch optional eine Auskopplung von Statussignalen in Gestalt von weiteren Lichtsignalen erreicht werden kann.

Es wird zudem ein Verfahren zum Beleuchten eines Getränkebehälterabstellabschnittes einer Heißgetränkemaschine vorgestellt, wobei das Verfahren in Verbindung mit einer Ausführungsform der vorstehend genannten Heißgetränkemaschine ausführbar ist, wobei das Verfahren einen Schritt des Erzeugens zumindest eines Lichtsignals und einen Schritt des Einkoppelns des Lichtsignals in die Lichtleitvorrichtung, umfasst, um das Lichtsignal zu dem Getränkebehälterabstellabschnitt zu leiten.

Dabei kann der Schritt des Erzeugens unter Verwendung der zumindest einen Lichtquelle der Auslaufvorrichtung durchgeführt werden. Hierbei kann das erzeugte Lichtsignal in die Lichtleitvorrichtung ein gekoppelt werden und mittels der Lichtleitvorrichtung zu dem Getränkebehälterabstellabschnitt geleitet werden.

Ein Ausführungsbeispiel der Erfindung ist in den Zeichnungen rein schematisch dargestellt und wird nachfolgend näher beschrieben. Es zeigt
- Figur 1: eine perspektivische Darstellung einer Heißgetränkemaschine gemäß einem Ausführungsbeispiel;
- Figur 2: eine perspektivische Darstellung der Auslaufvorrichtung aus Figur 1;
- Figur 3: eine Explosionsdarstellung der Lichtleitvorrichtung aus Figur 2;
- Figur 4: eine Explosionsdarstellung der Lichtleitvorrichtung aus Figur 2 mit Lichtquellen;
- Figur 5: eine schematische Schnittdarstellung eines Teilabschnittes einer Heißgetränkemaschine gemäß einem Ausführungsbeispiel; und
- Figur 6: ein Ablaufdiagramm eines Verfahrens zum Beleuchten gemäß einem Ausführungsbeispiel.

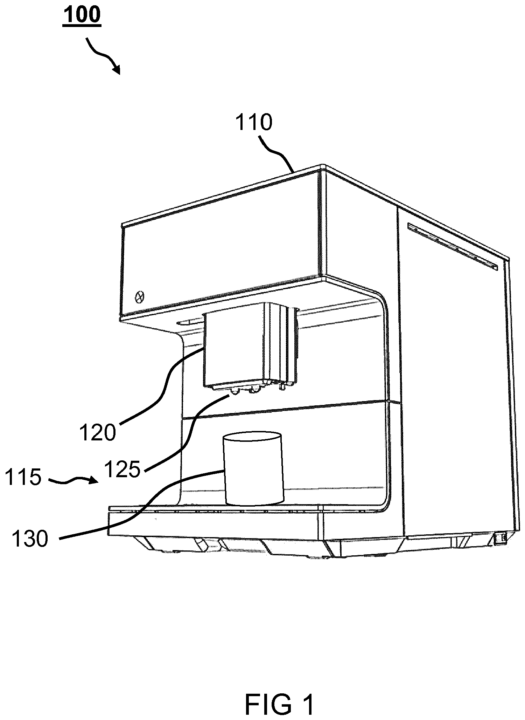

Figur 1 zeigt eine perspektivische Darstellung einer Heißgetränkemaschine 100 gemäß einem Ausführungsbeispiel. Dabei ist die Heißgetränkemaschine 100 als ein Kaffeevollautomat, insbesondere ein Stand-Kaffeevollautomat ausgeführt.

Die Heißgetränkemaschine 100 weist einen Korpus 110 und einen Getränkebehälterabstellabschnitt oder eine Abstellfläche 115 auf. Dabei ist der Getränkebehälterabstellabschnitt 115 als ein Teil des Korpus 110 ausgeformt, an den Korpus 110 angesetzt oder in den Korpus 110 eingesetzt. In dem Getränkebehälterabstellabschnitt 115 sind Getränkebehälter, beispielsweise Kaffeetassen oder dergleichen, zum Befüllen abstellbar.

Ferner weist die Heißgetränkemaschine 100 eine Auslaufvorrichtung 120 mit Auslaufdüsen 125 auf. Die Auslaufvorrichtung 120 ist relativ zu dem Korpus 110 bzw. relativ zu dem Getränkebehälterabstellabschnitt 115 bewegbar ausgeführt. Dabei ist die Auslaufvorrichtung 120 in einer in Figur 1 dargestellten Betriebsposition der Heißgetränkemaschine 100 oberhalb des Getränkebehälterabstellabschnittes 115 angeordnet. Die Auslaufvorrichtung 120 ist zu dem Getränkebehälterabstellabschnitt 115 hin und von dem Getränkebehälterabstellabschnitt 115 weg bewegbar, beispielsweise durch eine Antriebseinrichtung in dem Korpus 110.

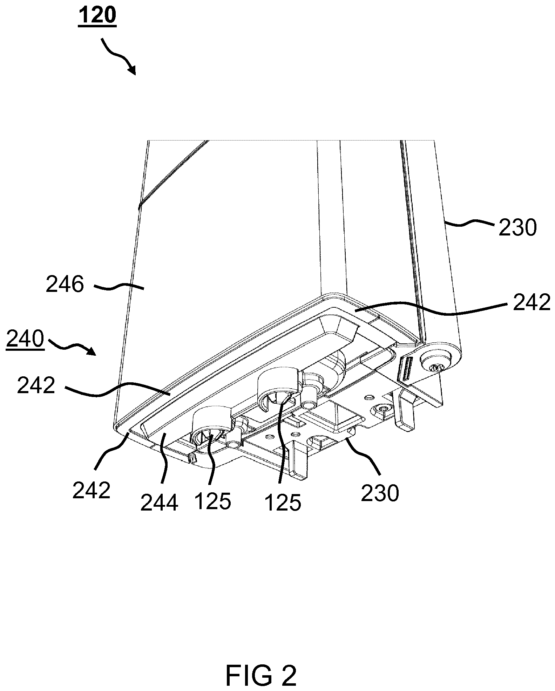

Die Auslaufvorrichtung 120 ist ausgebildet, um ein Befüllen von Getränkebehältern 130 und ein Beleuchten des Getränkebehälterabstellabschnittes 115 zu ermöglichen. Auf die Auslaufvorrichtung 120 wird nachfolgend unter Bezugnahme auf die Figuren 2 bis 5 noch detaillierter eingegangen.

Figur 2 zeigt eine perspektivische Darstellung der Auslaufvorrichtung 120 mit den Auslaufdüsen 125 aus Figur 1. Dabei ist die Auslaufvorrichtung 120 in einer schematischen Ansicht von schräg unten gezeigt.

Die Auslaufvorrichtung 120 weist eine Auslaufeinrichtung 230 und eine Lichtleitvorrichtung 240 auf. Dabei sind die Auslaufeinrichtung 230 und die Lichtleitvorrichtung 240 mechanisch miteinander koppelbar. In der Darstellung von Figur 2 ist die Lichtleitvorrichtung 240 mit der Auslaufeinrichtung 230 gekoppelt gezeigt.

Anders ausgedrückt ist die Lichtleitvorrichtung 240 an der Auslaufeinrichtung 230 befestigbar ausgeformt bzw. befestigt. Bei einer Bewegung der Auslaufeinrichtung 230 ist die Lichtleitvorrichtung 240 mit der Auslaufeinrichtung 230 mitbewegbar. Die Lichtleitvorrichtung 240 ist ausgebildet, um Licht von zumindest einer in der Auslaufeinrichtung 230 angeordneten Lichtquelle zu dem Getränkebehälterabstellabschnitt der Heißgetränkemaschine 100 hin zu leiten.

Auch wenn es in Figur 2 darstellungsbedingt nicht erkennbar ist, so weist die Auslaufvorrichtung 120 ferner zumindest eine Lichtquelle auf. Die zumindest eine Lichtquelle ist ausgebildet, um zumindest ein Lichtsignal zum Einkoppeln in und Leiten durch die Lichtleitvorrichtung 240 zu erzeugen.

Gemäß dem hier dargestellten Ausführungsbeispiel weist die Lichtleitvorrichtung 240 eine Lichtleitereinrichtung 242, ein Trägerelement 244 zum Anbringen der Lichtleitvorrichtung 240 an der Auslaufeinrichtung 230 und ein Abdeckelement 246 zum Abdecken der Lichtleitereinrichtung 242 und des Trägerelements 244 auf. Dabei ist die Lichtleitereinrichtung 242 zwischen dem Abdeckelement 246 und dem Trägerelement 244 angeordnet.

Die Lichtleitereinrichtung 242 ist als ein Lichtleiter oder Lichtleitkörper ausgeformt. Gemäß einem anderen Ausführungsbeispiel weist die Lichtleitereinrichtung 242 einen Lichtleiter auf. Das Trägerelement 244 ist ausgebildet, um die Lichtleitvorrichtung 240 an der Auslaufeinrichtung 230 anzubringen. Das Abdeckelement 246 ist ausgebildet, um die Lichtleitereinrichtung 242 und das Trägerelement 244 abzudecken.

Von der Lichtleitereinrichtung 242 bzw. dem Lichtleiter 242 oder Lichtleitkörper 242 ist in Figur 2 darstellungsbedingt lediglich ein Lichtauskopplungsende sichtbar. Gemäß dem hier gezeigten Ausführungsbeispiel weist zumindest das Lichtauskopplungsende der Lichtleitereinrichtung 242 längliches, insbesondere U-förmig gekrümmtes Querschnittsprofil auf. Ferner ist das Lichtauskopplungsende der Lichtleitereinrichtung 242 zum Verteilen von Licht bearbeitet. Insbesondere ist das Lichtauskopplungsende der Lichtleitereinrichtung 242 hierzu mit einer Erodierstruktur oder dergleichen versehen. Zudem ist ein Endabschnitt der Lichtleitereinrichtung 242, der zumindest das Lichtauskopplungsende umfasst, gemäß dem hier dargestellten Ausführungsbeispiel ausgeformt, um in einem zusammengebauten Zustand der Lichtleitvorrichtung 240, der in Figur 2 gezeigt ist, aus einem Zwischenraum zwischen dem Abdeckelement 246 und dem Trägerelement 244 hervorzustehen.

Gemäß einem Ausführungsbeispiel ist die Lichtleitvorrichtung 240 mit der Auslaufeinrichtung 230 auf lösbare Weise koppelbar ausgeformt bzw. gekoppelt, insbesondere mittels zumindest eines Magneten.

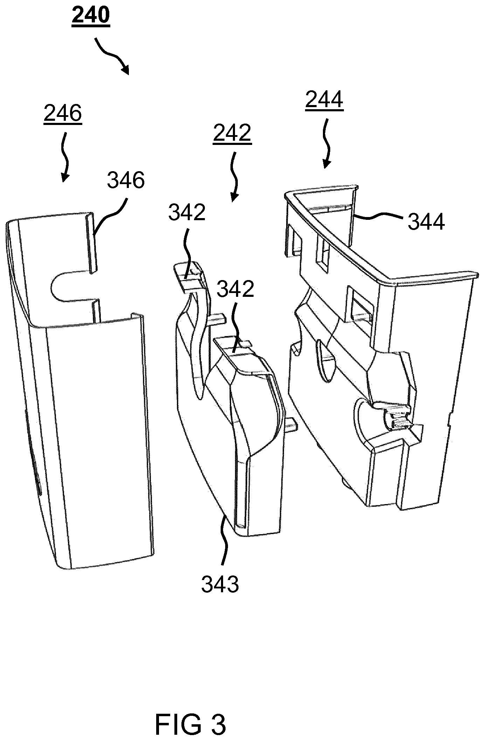

Figur 3 zeigt eine Explosionsdarstellung der Lichtleitvorrichtung 240 aus Figur 2. Hierbei sind die Lichtleitereinrichtung 242, das Trägerelement 244 und das Abdeckelement 246 voneinander beabstandet gezeigt. Dabei ist die Lichtleitereinrichtung 242 zwischen dem Abdeckelement 246 und dem Trägerelement 244 angeordnet.

In der Darstellung von Figur 3 ist erkennbar, dass die Lichtleitereinrichtung 242 gemäß dem hier gezeigten Ausführungsbeispiel zwei Lichteinkopplungsvorsprünge 342 aufweist. Die Lichteinkopplungsvorsprünge 342 sind als Teilabschnitte der Lichtleitereinrichtung 242 ausgeformt. Genauer gesagt verzweigt sich die Lichtleitereinrichtung 242 zu einem Lichteinkopplungsende hin in die zwei Lichteinkopplungsvorsprünge 342. Zwischen den beiden Lichteinkopplungsvorsprüngen 342 weist die Lichtleitereinrichtung 242 einen U-förmigen oder V-förmigen Ausnehmungsabschnitt auf. Zu Veranschaulichungszwecken ist in Figur 3 von der Lichtleitereinrichtung 242 ferner das Lichtauskopplungsende 343 eingezeichnet, welches in Figur 2 von der Lichtleitereinrichtung 242 zu sehen ist.

Die Leichtleitereinrichtung 242 ist in der gezeigten Ausführung als Steg schalenförmig und gekrümmt ausgebildet, damit sie im eingebauten Zustand das Trägerelement 244 zumindest bereichsweise umschließt oder umgibt. Diese schalenförmig gekrümmte Ausführung kommt bevorzugt für alle genannten Ausführungen und Weiterbildungen in Betracht. Somit folgt es im Wesentlichen der äußeren, zum Benutzer weisenden Kontur des Trägerelements 244 und/oder der inneren Kontur des Abdeckelements 266. Somit muss für die Aufnahme der Lichtleitereinrichtung 242 nur ein extrem kleiner Bauraum innerhalb des Auslaufs 120 vorgehalten werden.

Gemäß einem Ausführungsbeispiel ist die Lichtleitereinrichtung 242 einstückig ausgeformt. Zusätzlich oder alternativ ist die Lichtleitereinrichtung 242 beispielsweise aus einem Kunststoff ausgeformt. Dabei kann die Lichtleitereinrichtung 242 insbesondere durch Spritzgießen ausgeformt sein, beispielsweise aus Polymethylmethacrylat (PMMA) oder einem anderen Kunststoff.

Das Trägerelement 244 und das Abdeckelement 246 weisen gemäß dem hier dargestellten Ausführungsbeispiel jeweils ein U-förmiges Querschnittsprofil auf. Dabei ist das Trägerelement 244 beispielsweise aus einem Kunststoff ausgeformt. Das Trägerelement 244 fungiert beispielsweise auch als eine rückseitige Kunststoffverkleidung für die Lichtleitereinrichtung 242. Das Abdeckelement 246 ist beispielsweise als ein Abdeckblech, beispielsweise verchromtes Blech, Aluminium oder Edelstahl, ausgeführt.

Zur formschlüssigen Verbindung des Trägerelements 244 und des Abdeckelements 246 miteinander sind beispielsweise zwei gegenüberliegende Endkanten des Abdeckelements 246 abgewickelt oder abknickend ausgeformt, um zwei weitere, gegenüberliegende Endkanten des Trägerelements 244 in einem miteinander verbundener Zustand des Trägerelements 244 und des Abdeckelements 246 zu umgreifen. Somit sind das Trägerelement 244 und das Abdeckelement 246 sowie die zwischen denselben angeordnete Lichtleitereinrichtung 242 in einem ineinander gestapelten Zustand formschlüssig miteinander verbunden.

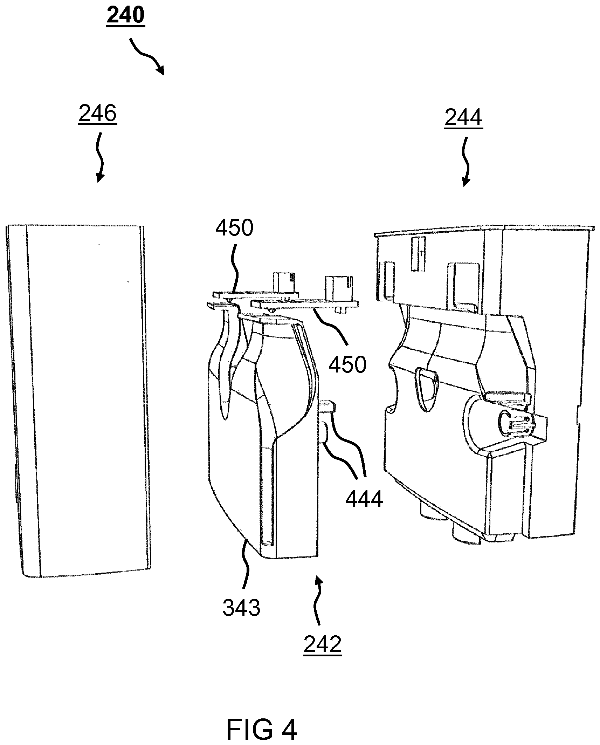

Figur 4 zeigt eine Explosionsdarstellung der Lichtleitvorrichtung 240 aus Figur 2 mit Lichtquellen 450. In dem gezeigten Beispiel sind die Lichtleitereinrichtung 242, das Trägerelement 244, das Abdeckelement 246 und zwei Lichtquellen 450 voneinander beabstandet gezeigt. Dabei ist die Lichtleitereinrichtung 242 zwischen dem Abdeckelement 246 und dem Trägerelement 244 angeordnet, wobei die Lichtquellen 450 benachbart zu den Lichteinkopplungsvorsprüngen der Lichtleitereinrichtung 242 angeordnet sind. Alternativ kann die Lichtleitvorrichtung mit einer Lichtquelle 450 oder mehr als zwei Lichtquellen 450 ausgeführt werden.

Die Darstellung in Figur 4 entspricht hierbei der Darstellung aus Figur 3 mit Ausnahme dessen, dass die Lichtleitvorrichtung 240 aus einer leicht unterschiedlichen Perspektive gezeigt ist, die Lichtquellen 450 dargestellt sind und von der Lichtleitereinrichtung 242 ferner beispielhaft zwei Befestigungsabschnitte 444 gezeigt sind.

Die Befestigungsabschnitte 444 sind als Teilabschnitte der Lichtleitereinrichtung 242 ausgeformt. Dabei sind die Befestigungsabschnitte 444 mit dem Trägerelement 244 formschlüssig verbindbar ausgeformt. Anders ausgedrückt sind die Lichtleitereinrichtung 242 und das Trägerelement 244 mittels der Befestigungsabschnitte 444 formschlüssig miteinander verbindbar.

Eine erste der Lichtquellen 450 ist benachbart zu einem ersten der Lichteinkopplungsvorsprünge der Lichtleitereinrichtung 242 angeordnet. Eine zweite der Lichtquellen 450 ist benachbart zu einem zweiten der Lichteinkopplungsvorsprünge der Lichtleitereinrichtung 242 angeordnet. Jede der Lichtquellen 450 umfasst beispielsweise eine Licht emittierende Diode bzw. LED, die auf einer Schaltungsplatine oder Leiterplatte angeordnet ist. Die Lichtquellen 450 sind ausgebildet, um jeweils zumindest ein Lichtsignal über die Lichteinkopplungsvorsprünge in die Lichtleitereinrichtung 242 der Lichtleitvorrichtung 240 einzukoppeln.

Anders ausgedrückt zeigen Figur 3 und Figur 4 zwei Ansichten des Lichtleitkörpers 242 mit Abdeckelement 246 bzw. Abdeckblech vorn und Trägerelement 244 bzw. Kunststoffverkleidung hinten.

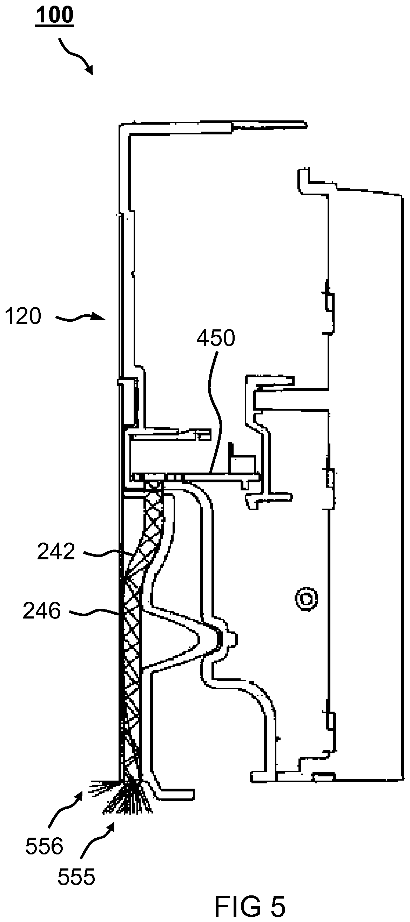

Figur 5 zeigt eine schematische Schnittdarstellung eines Teilabschnittes einer Heißgetränkemaschine 100 gemäß einem Ausführungsbeispiel. Bei der Heißgetränkemaschine 100 handelt es sich um die in Figur 1 gezeigte Heißgetränkemaschine oder eine ähnliche Heißgetränkemaschine. Die Schnittdarstellung in Figur 5 zeigt zumindest die Lichtleitvorrichtung oder die Auslaufvorrichtung der Heißgetränkemaschine 100.

In Figur 5 ist insbesondere symbolisch ein Strahlengang 555 oder Strahlenverlauf 555 von Licht bzw. eines Lichtsignals in der Lichtleiteinrichtung 242 bzw. dem Lichtleitkörper 242 gezeigt. Hierbei erstreckt sich der Strahlenverlauf 555 von der Lichtquelle 450 durch die Lichtleiteinrichtung 242 hindurch zu deren Lichtauskopplungsende und tritt dort aus der Lichtleiteinrichtung 242 aus, um sich zumindest in dem Getränkebehälterabstellabschnitt der Heißgetränkemaschine 100 zu verteilen. Aufgrund eines in Richtung des Getränkebehälterabstellabschnitts weisenden Überstands der Lichtleiteinrichtung 242 über das Abdeckelement 246 ist ein dem Getränkebehälterabstellabschnitt zugewandter Randabschnitt der Lichtleiteinrichtung 242 nicht durch das Abdeckelement 246 abgedeckt. Auf diese Weise kann ein Teil des durch die Lichtleiteinrichtung 242 geleiteten Lichts 556 quer zur Haupterstreckungsebene des Abdeckelements 246 entweichen. Dieses Licht kann von einer Bedienperson direkt, also ohne Reflexion an dem Getränkebehälterabstellabschnitt, erfasst werden. Der Hauptanteil 555 des Lichts wird jedoch in Richtung des Getränkebehälterabstellabschnitts abgestrahlt.

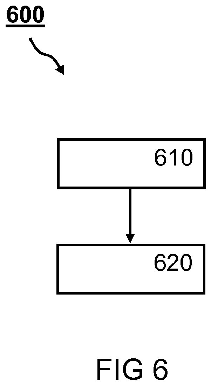

Figur 6 zeigt ein Ablaufdiagramm eines Verfahrens 600 zum Beleuchten eines Getränkebehälterabstellabschnittes einer Heißgetränkemaschine. Dabei ist das Verfahren 600 zum Beleuchten in Verbindung mit der Heißgetränkemaschine aus Figur 1 oder einer ähnlichen Heißgetränkemaschine ausführbar. Insbesondere ist das Verfahren 600 zum Beleuchten auch in Verbindung mit der Auslaufvorrichtung und/oder Lichtleitvorrichtung aus einer der Figuren 1 bis 5 ausführbar, um einen Getränkebehälterabstellabschnitt einer Heißgetränkemaschine wie der Heißgetränkemaschine aus Figur 1 zu beleuchten.

Das Verfahren 600 zum Beleuchten weist einen Schritt 610 des Erzeugens zumindest eines Lichtsignals und einen Schritt 620 des Einkoppelns des Lichtsignals in die Lichtleitvorrichtung auf.. Dabei wird der Schritt 610 des Erzeugens unter Verwendung der zumindest einen Lichtquelle der Auslaufvorrichtung ausgeführt.

Unter Bezugnahme auf die Figuren 1 bis 6 wird nachfolgend ein Ausführungsbeispiel nochmals zusammenfassend und mit anderen Worten erläutert.

Die Lichtleitvorrichtung 240 insgesamt ist als eine Abdeckung auf die Auslaufeinrichtung 230 der Heißgetränkemaschine 100 aufsteckbar. Ein flächiger Lichtleiter 242 bzw. Lichtvorhang, insbesondere aus PMMA-Kunststoff, transportiert durch innere Totalreflexion das durch zwei Lichtquellen 250 (LEDs) eingespeiste Licht zu dem als Auskoppelfläche fungierenden Lichtauskopplungsende 343 an der Unterseite des Auslaufes. Das Lichtauskopplungsende 343 trägt eine spezifische Erodierstruktur zur Strahlenverteilung.

Der flächige Lichtleiter 242 liegt formschlüssig direkt hinter der äußeren Metallabdeckung bzw. dem Abdeckelement 246. Rückseitig ist ebenfalls formschlüssig das Trägerelement 244 als eine Abdeckung aus Kunststoff aufgebracht. Die Lichtleitvorrichtung 240 insgesamt kann vom Auslauf bzw. der Auslaufeinrichtung 230 entfernt und wieder aufgesetzt werden und wird beispielsweise mittels Magneten an seinem Platz gehalten. Die Form der Lichtleitvorrichtung 240 bewirkt, dass das von den Lichtquellen 250 eingespeiste Licht effektiv zum Lichtauskopplungsende 343 transportiert wird. Die Metallabdeckung bzw. das Abdeckelement 246 lässt beispielsweise 0,8 mm des Lichtleiters 242 unabgedeckt, so dass ein Betrachter aus normalem Blickwinkel einen Lichtstreifen wahrnimmt und erkennen kann, wenn beispielsweise Lichtsignale abgegeben werden. Da das lichttechnische Element bzw. die Lichtleitvorrichtung 240 integraler Bestandteil des Auslaufes bzw. der Auslaufvorrichtung 120 ist, bewegt sich die Lichtleitvorrichtung 240 auf der gesamten Verfahrstrecke der Auslaufeinrichtung 130 mit.

Auch wenn es nicht explizit gezeigt ist, kann die Heißgetränkemaschine 100 gemäß einem Ausführungsbeispiel auch ein Steuergerät aufweisen, das mit der zumindest einen Lichtquelle 450 signalübertragungsfähig verbunden sein kann. Dabei kann das Steuergerät ausgebildet sein, um unter Verwendung von Betriebsdaten der Heißgetränkemaschine 100 ein Ansteuersignal zum Ansteuern der zumindest einen Lichtquelle 450 der Auslaufvorrichtung 120 zu generieren, um zu bewirken, dass zumindest ein Lichtsignal, das eine Bedieninformation hinsichtlich einer Bedienung der Heißgetränkemaschine 100 repräsentiert, durch die zumindest eine Lichtquelle 450 erzeugt und mittels der Lichtleitvorrichtung 240 geleitet wird.

## Patentansprüche

1. Lichtleitvorrichtung (240) für eine Auslaufvorrichtung (120, 230) für eine Heißgetränkemaschine (100), wobei die Auslaufvorrichtung (120, 230) relativ zu einem Korpus (110) der Heißgetränkemaschine (100) und zu einem Getränkebehälterabstellabschnitt (115) der Heißgetränkemaschine (100) bewegbar ist, **dadurch gekennzeichnet, dass** die Lichtleitvorrichtung (240) an der Auslaufvorrichtung (120, 230) befestigbar ausgeformt ist, wobei die Lichtleitvorrichtung (240) mit der Auslaufvorrichtung (120, 230) mitbewegbar ist, wobei die Lichtleitvorrichtung (240) mit einem linienförmigen Lichtaustritt (555) ausgebildet ist, um Licht von zumindest einer in der Auslaufvorrichtung (120, 230) angeordneten Lichtquelle (450) zu dem Getränkebehälterabstellabschnitt (115) zu leiten.

2. Lichtleitvorrichtung (240) gemäß Anspruch 1, **gekennzeichnet durch** eine Lichtleitereinrichtung (242), die einen Lichtleiter zum Leiten des Lichts aufweist oder als ein Lichtleiter zum Leiten des Lichts ausgeformt ist.

3. Lichtleitvorrichtung (240) gemäß Anspruch 2, **dadurch gekennzeichnet, dass** die Lichtleitereinrichtung (242) einstückig und/oder aus einem Kunststoff ausgeformt ist, insbesondere mittels Spritzgießens.

4. Lichtleitvorrichtung (240) gemäß einem der Ansprüche 2 bis 3, **dadurch gekennzeichnet, dass** die Lichtleitereinrichtung (242) mit zwei Lichteinkopplungsvorsprüngen (342) zum Einkoppeln des Lichts ausgeformt ist.

5. Lichtleitvorrichtung (240) gemäß einem der Ansprüche 2 bis 4, **dadurch gekennzeichnet, dass** die Lichtleitereinrichtung (242) mit einem länglichen oder U-förmig gekrümmten Querschnittsprofil an einem Lichtauskopplungsende (343) zum Auskoppeln des Lichts ausgeformt ist.

6. Lichtleitvorrichtung (240) gemäß einem der Ansprüche 2 bis 5, **gekennzeichnet durch** ein Abdeckelement (246) und ein Trägerelement (244) zum Anbringen der Lichtleitvorrichtung (240) an der Auslaufeinrichtung (230), wobei die Lichtleitereinrichtung (242) ausgeformt ist, um zwischen dem Abdeckelement (246) und dem Trägerelement (244) anordenbar oder angeordnet zu sein.

7. Lichtleitvorrichtung (240) gemäß Anspruch 6, **dadurch gekennzeichnet, dass** die Lichtleitereinrichtung (242) zumindest einen Befestigungsabschnitt (444) aufweist, der mit dem Abdeckelement (246) und/oder dem Trägerelement (244) formschlüssig verbindbar ausgeformt ist, wobei das Abdeckelement (246) und das Trägerelement (244) formschlüssig miteinander verbindbar ausgeformt sind.

8. Lichtleitvorrichtung (240) gemäß einem der Ansprüche 6 bis 7, **dadurch gekennzeichnet, dass** ein ein Lichtauskopplungsende (343) umfassender Endabschnitt der Lichtleitereinrichtung in einem zusammengebauten Zustand der Lichtleitvorrichtung (240) einen Überstand gegenüber dem Abdeckelement (246) aufweist.

9. Auslaufvorrichtung (120) für eine Heißgetränkemaschine (100), wobei die Auslaufvorrichtung (120) Auslaufdüsen (125) und eine Auslaufeinrichtung (230), die relativ zu einem Korpus (110) der Heißgetränkemaschine (100) und zu einem Getränkebehälterabstellabschnitt (115) der Heißgetränkemaschine (100) bewegbar ausgeführt ist, und zumindest eine Lichtquelle (450) zum Bereitstellen eines Lichtsignals aufweist, **gekennzeichnet durch** eine Lichtleitvorrichtung (240) gemäß einem der vorangegangenen Ansprüche, wobei die Lichtleitvorrichtung (240) mit der Auslaufeinrichtung (230) gekoppelt ist und ausgebildet ist, um das Lichtsignal der Lichtquelle (450) zu dem Getränkebehälterabstellabschnitt (115) zu leiten.

10. Auslaufvorrichtung (120) gemäß Anspruch 9, **dadurch gekennzeichnet, dass** die Lichtleitvorrichtung (240) mit der Auslaufeinrichtung (230) auf lösbare Weise gekoppelt ist, insbesondere mittels zumindest eines Magneten.

11. Heißgetränkemaschine (100), die einen Korpus (110) und einen Getränkebehälterabstellabschnitt (115) aufweist, **gekennzeichnet durch** eine Auslaufvorrichtung (120) gemäß Anspruch 9 oder 10, wobei die Auslaufvorrichtung (120) relativ zu dem Korpus (110) und zu dem Getränkebehälterabstellabschnitt (115) bewegbar ausgeführt ist.

12. Heißgetränkemaschine (100) gemäß Anspruch 11, **gekennzeichnet durch** ein Steuergerät, das ausgebildet ist, um unter Verwendung von Betriebsdaten der Heißgetränkemaschine (100) ein Ansteuersignal zum Ansteuern der zumindest einen Lichtquelle (450) der Auslaufeinrichtung (230) der Auslaufvorrichtung (120) zu generieren, um zu bewirken, dass zumindest ein Lichtsignal, das eine Bedieninformation hinsichtlich einer Bedienung der Heißgetränkemaschine (100) repräsentiert, durch die zumindest eine Lichtquelle (450) erzeugt und mittels der Lichtleitvorrichtung (240) zu dem Getränkebehälterabstellabschnitt (115) geleitet wird.

13. Verfahren (600) zum Beleuchten eines Getränkebehälterabstellabschnittes (115) einer Heißgetränkemaschine (100), wobei das Verfahren (600) in Verbindung mit einer Heißgetränkemaschine (100) gemäß Anspruch 11 oder 12 ausführbar ist, **gekennzeichnet durch** einen Schritt (610) des Erzeugens zumindest eines Lichtsignals und einen Schritt (620) des Einkoppelns des Lichtsignals in die Lichtleitvorrichtung (240), um das Lichtsignal zu dem Getränkebehälterabstellabschnitt (115) zu leiten.

## Claims

1. Light guide device (240) for an outlet device (120, 230) for a hot drink machine (100), the outlet device (120, 230) being movable relative to a body (110) of the hot drink machine (100) and to a drink container placement portion (115) of the hot drink machine (100), **characterised in that** the light guide device (240) can be fastened to the outlet device (120, 230), it being possible to move the light guide device (240) together with the outlet device (120, 230), the light guide device (240) being designed having a linear light exit (555) in order to guide light from at least one light source (450) arranged in the outlet device (120, 230) to the drink container placement portion (115).

2. Light guide device (240) according to claim 1, **characterised by** an optical waveguide apparatus (242) which comprises an optical waveguide for guiding the light or is formed as an optical waveguide for guiding the light.

3. Light guide device (240) according to claim 2, **characterised in that** the optical waveguide apparatus (242) is formed as a single piece and/or from a plastics material, in particular by means of injection moulding.

4. Light guide device (240) according to either claim 2 or claim 3, **characterised in that** the optical waveguide apparatus (242) is formed having two light coupling projections (342) for coupling in the light.

5. Light guide device (240) according to any of claims 2 to 4, **characterised in that** the optical waveguide apparatus (242) is formed having an elongate or U-shaped curved cross-sectional profile at a light decoupling end (343) for decoupling the light.

6. Light guide device (240) according to any of claims 2 to 5, **characterised by** a cover element (246) and a carrier element (244) for attaching the light guide device (240) to the outlet apparatus (230), the optical waveguide apparatus (242) being formed so as to be arrangeable or arranged between the cover element (246) and the carrier element (244).

7. Light guide device (240) according to claim 6, **characterised in that** the optical waveguide apparatus (242) comprises at least one fastening portion (444) which is formed such that it can interlockingly connect to the cover element (246) and/or to the carrier element (244), the cover element (246) and the carrier element (244) being formed such that they can interlockingly connect to one another.

8. Light guide device (240) according to either claim 6 or claim 7, **characterised in that**, when the light guide device (240) is in an assembled state, an end portion of the optical waveguide apparatus that comprises a light decoupling end (343) has a projection relative to the cover element (246).

9. Outlet device (120) for a hot drink machine (100), the outlet device (120) comprising outlet nozzles (125), an outlet apparatus (230) which is movable relative to a body (110) of the hot drink machine (100) and to a drink container placement portion (115) of the hot drink machine (100), and at least one light source (450) for providing a light signal, **characterised by** a light guide device (240) according to any of the preceding claims, the light guide device (240) being coupled to the outlet apparatus (230) and designed to guide the light signal of the light source (450) to the drink container placement portion (115).

10. Outlet device (120) according to claim 9, **characterised in that** the light guide device (240) is detachably coupled to the outlet apparatus (230), in particular by means of at least one magnet.

11. Hot drink machine (100) comprising a body (110) and a drink container placement portion (115), **characterised by** an outlet device (120) according to either claim 9 or claim 10, the outlet device (120) being movable relative to the body (110) and to the drink container placement portion (115).

12. Hot drink machine (100) according to claim 11, **characterised by** a controller which is designed to use operating data of the hot drink machine (100) to generate a control signal for controlling the at least one light source (450) of the outlet apparatus (230) of the outlet device (120), in order to cause at least one light signal, which represents operating information regarding an operation of the hot drink machine (100), to be generated by the at least one light source (450) and guided to the drink container placement portion (115) by means of the light guide device (240).

13. Method (600) for illuminating a drink container placement portion (115) of a hot drink machine (100), it being possible to carry out the method (600) in conjunction with a hot drink machine (100) according to either claim 11 or claim 12, **characterised by** a step (610) of generating at least one light signal and a step (620) of coupling the light signal into the light guide device (240) in order to guide the light signal to the drink container placement portion (115).

## Revendications

1. Dispositif de guidage de lumière (240) pour un dispositif d'écoulement (120, 230) d'une machine servant des boissons chaudes (100), le dispositif d'écoulement (120, 230) étant mobile par rapport à un corps (110) de la machine servant des boissons chaudes (100) et à une zone de dépôt du récipient à boisson (115) de la machine servant des boissons chaudes (100), **caractérisé en ce que** le dispositif de guidage de lumière (240) peut être monté par surmoulage sur le dispositif d'écoulement (120, 230), le dispositif de guidage de lumière (240) pouvant se déplacer avec le dispositif d'écoulement (120, 230), le dispositif de guidage de lumière (240) comportant une sortie de lumière linéaire (555) destinée à guider la lumière d'au moins une source lumineuse (450) disposée dans le dispositif d'écoulement (120, 230) vers la zone de dépôt du récipient à boisson (115).

2. Dispositif de guidage de lumière (240) selon la revendication 1, **caractérisé par** un moyen de guidage de lumière (242) présentant un guide de lumière destiné à guider la lumière ou étant réalisé sous la forme d'un guide de lumière destiné à guider la lumière.

3. Dispositif de guidage de lumière (240) selon la revendication 2, **caractérisé en ce que** le moyen de guidage de lumière (242) est réalisé en une seule pièce et/ou constitué d'une matière plastique, en particulier au moyen d'un moulage par injection.

4. Dispositif de guidage de lumière (240) selon l'une des revendications 2 à 3, **caractérisé en ce que** le moyen de guidage de lumière (242) comporte deux projections d'injection de lumière (342) destinées à injecter de la lumière.

5. Dispositif de guidage de lumière (240) selon l'une des revendications 2 à 4, **caractérisé en ce que** le moyen de guidage de lumière (242) présente un profil de section transversale allongé ou incurvé en forme de U à une extrémité d'extraction de lumière (343), destiné à l'extraction de la lumière.

6. Dispositif de guidage de lumière (240) selon l'une des revendications 2 à 5, **caractérisé par** un élément de recouvrement (246) et un élément de support (244) destiné à fixer le dispositif de guidage de lumière (240) au moyen d'écoulement (230), le moyen de guidage de lumière (242) étant conçu de manière à pouvoir être disposé entre l'élément de recouvrement (246) et l'élément de support (244) ou pour être disposé entre ceux-ci.

7. Dispositif de guidage de lumière (240) selon la revendication 6, **caractérisé en ce que** le moyen de guidage de lumière (242) présente au moins une section de fixation (444) qui est conçue de manière à pouvoir être reliée par liaison de forme à l'élément de recouvrement (246) et/ou à l'élément de support (244), l'élément de recouvrement (246) et l'élément de support (244) étant conçus de manière à pouvoir être reliés par liaison de forme.

8. Dispositif de guidage de lumière (240) selon l'une des revendications 6 à 7, **caractérisé en ce qu'**une partie d'extrémité du moyen de guidage de lumière comprenant une extrémité d'extraction de lumière (343) comporte une saillie par rapport à l'élément de recouvrement (246) dans un état assemblé du dispositif de guidage de lumière (240).

9. Dispositif d'écoulement (120) pour une machine servant des boissons chaudes (100), le dispositif d'écoulement (120) comportant des buses d'écoulement (125) et un moyen d'écoulement (230) mobile par rapport à un corps (110) de la machine servant des boissons chaudes (100) et à une zone de dépôt du récipient à boisson (115) de la machine servant des boissons chaudes (100), et au moins une source lumineuse (450) destinée à fournir un signal lumineux, **caractérisé par** un dispositif de guidage de lumière (240) selon l'une des revendications précédentes, le dispositif de guidage de lumière (240) étant couplé au moyen d'écoulement (230) et étant conçu pour guider le signal lumineux de la source lumineuse (450) vers la zone de dépôt du récipient à boisson (115).

10. Dispositif d'écoulement (120) selon la revendication 9, **caractérisé en ce que** le dispositif de guidage de lumière (240) est couplé au dispositif d'écoulement (230) de manière amovible, en particulier au moyen d'au moins un aimant.

11. Machine servant des boissons chaudes (100) présentant un corps (110) et une zone de dépôt de récipient à boisson (115), **caractérisée par** un dispositif d'écoulement (120) selon la revendication 9 ou 10, le dispositif d'écoulement (120) étant mobile par rapport au corps (110) et à la zone de dépôt du récipient à boisson (115).

12. Machine servant des boissons chaudes (100) selon la revendication 11, **caractérisée par** un appareil de commande conçu pour générer, à l'aide des données de fonctionnement de la machine servant des boissons chaudes (100), un signal de commande destiné à commander l'au moins une source lumineuse (450) du moyen d'écoulement (230) du dispositif d'écoulement (120), afin de faire en sorte qu'au moins un signal lumineux représentant des informations de fonctionnement relatives au fonctionnement de la machine servant des boissons chaudes (100) soit produit par l'au moins une source lumineuse (450) et guidé par le dispositif de guidage de lumière (240) vers la zone de dépôt du récipient à boisson (115).

13. Procédé (600) d'éclairage d'une zone de dépôt de récipient à boisson (115) d'une machine servant des boissons chaudes (100), le procédé (600) pouvant être exécuté conjointement avec une machine servant des boissons chaudes (100) selon la revendication 11 ou 12, **caractérisé par** une étape (610) de production d'au moins un signal lumineux et une étape (620) d'injection du signal lumineux dans le dispositif de guidage de lumière (240) afin de guider le signal lumineux vers la zone de dépôt du récipient à boisson (115).
